# EUROPEAN PATENT APPLICATION

(11) **EP 3 035 297 A1**
(43) Date of publication of application: **22.06.2016**
(21) Application number: 15194693.6
(22) Date of filing: 16.11.2015
(51) Int. Cl.: G07B 17/00

(54) **METHOD AND SYSTEM FOR SUPPORTING MULTIPLE POSTAGE PRINTING DEVICES USING MULTIPLE CUSTOMER ACCOUNTS WITHOUT HAVING TO MAINTAIN FUNDS IN EACH CUSTOMER ACCOUNT**

(30) Priority: 16.12.2014 US 201414571687
(71) Applicant: Pitney Bowes Inc., Danbury, CT 06810 (US)
(72) Inventor: DeFilippo, Craig J., Shelton, CT Connecticut 06484 (US); Monroe, George T., Seymour, CT Connecticut 06483 (US)
(74) Representative: Hoffmann Eitle

(57) **Abstract**

A system and method for allowing a customer to maintain multiple customer accounts used for generating and printing postage without having to maintain a minimum amount of funds in each account. When multiple accounts are maintained for a customer, only one the of the multiple accounts maintains pre-paid funds in the registers. The other accounts do not have any pre-paid funds, i.e., maintain zero funds, in the registers. When a customer account that does not have any pre-paid funds stored therein is utilized to generate postage, the register in that account is refilled for the exact amount of postage to be generated from a customer payment account. By performing on-demand postage refills for the exact amount needed to generate an indicium, the customer is no longer required to have funds committed to each customer account while still being able to utilize multiple accounts for multiple postage printing devices.

## Description

The invention disclosed herein relates generally to postage printing systems, and more particularly to postage printing systems that utilize multiple customer accounts without having to maintain funds in each of the customer accounts.

Conventional postage printing systems utilize a pre-paid accounts in which funds are stored in a register for use to generate and print postage. In a conventional closed postage metering system, each postage printing device maintained its own funds register in a secure device, known as a postal security device (PSD). Examples of closed postage metering systems include mailing machines that often include different modules that automate the processes of producing mail pieces. Mail pieces can include, for example, envelopes, post cards, flats, and the like. The typical mailing machine includes a variety of different modules or sub-systems each of which performs a different task on the mail piece. The PSD would generate indicia for printing on mail pieces, utilizing the funds stored therein. In conventional mail processing systems, the PSD is configured for a specific application at time of initialization. This typically happens at a stage late in the manufacturing process. Once configured, the PSD is locked into that specific configuration throughout its life. Being locked into a specific configuration limits the potential uses of the mail processing system. In situations where it may be desired to support multiple carriers and customers, such as for example, in a mailhouse environment or a shared mail processing system environment, it would be necessary to utilize multiple mail processing systems.

To overcome this problem, the ability to dynamically configure a postage printing system has been proposed. Customer accounts are maintained by the postage vendor in a remote database. Each customer account maintains the information necessary to generate postage for that customer, including pre-paid funds required to pay for the postage. When a customer desires to print postal indicia, the customer account is retrieved from a remote database for use in generating the indicia. When the customer is finished, the customer account is updated and returned to the remote database. Thus, the PSD of a postage printing system is not locked into a single configuration, but instead can be dynamically configured for a plurality of different customer accounts. While this greatly improves the flexibility of such systems, there are still some problems from the customer's point of view. In many instances, it will be necessary for a customer to maintain multiple customer accounts as it may be desired to operate more than one device at the same time to generate postal indicia. For example, a business may utilize more than one mailing machine, on-line postage printing using a personal computer or other similar device, or combination of the two. For each account, it is necessary for the customer to maintain some minimum amount of funds stored therein for use in generating postage. This means the customer has to have funds tied up in multiple accounts, which is not desirable for many customers.

It would be desirable, therefore, to be able to support multiple customer accounts without having to maintain separate funds in each account.

The present invention alleviates the problems noted above and provides a system and method for allowing a customer to maintain multiple customer accounts used for generating and printing postage without having to maintain a minimum amount of funds in each account.

The accompanying drawings illustrate presently preferred embodiments of the invention. As shown throughout the drawings, like reference numerals designate like or corresponding parts.
FIG. 1 illustrates a system according to an embodiment of the present invention; and
FIGS. 2A and 2B illustrate in flow chart form an example of the processing performed by the system illustrated in Fig. 1.

In accordance with an embodiment of the present invention, when multiple accounts are maintained for a customer, only one of the multiple accounts maintains pre-paid funds in the registers. The other accounts do not have any pre-paid funds, i.e., maintain zero funds, in the registers. When a customer account that does not have any pre-paid funds stored therein is utilized to generate postage, the register in that account is refilled for the exact amount of postage to be generated from a customer payment account. By performing on-demand postage refills for the exact amount needed to generate an indicium, the customer is no longer required to have funds committed to each customer account while still being able to utilize multiple accounts for multiple postage printing devices.

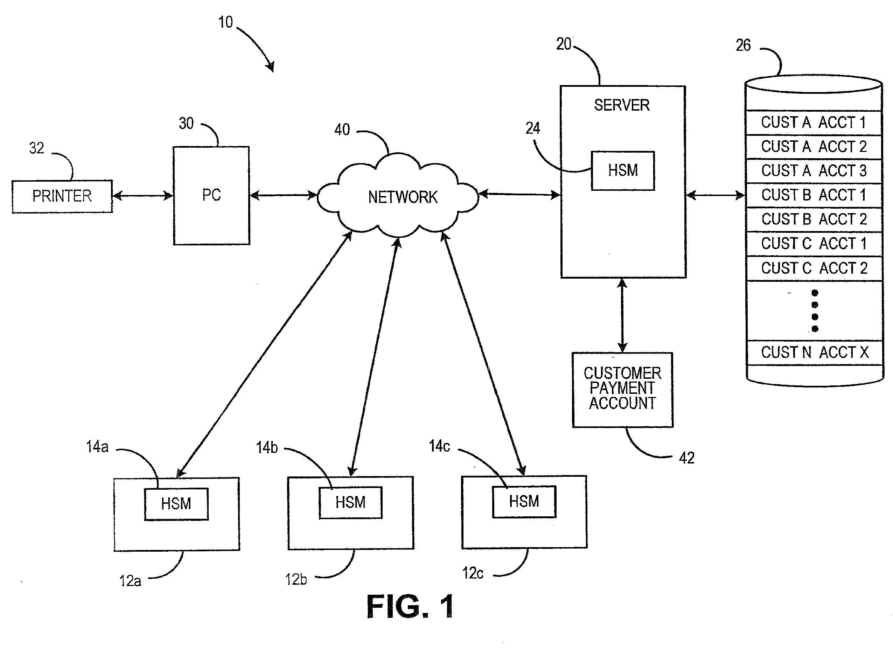

In describing embodiments of the present invention, reference is made to the drawings, wherein there is seen in Fig. 1 a system 10 that operates according to an embodiment of the present invention. System 10 can include one or more (three illustrated) postage printing devices 12a, 12b, 12c, such as, for example, a mailing machine, inserter system or the like that is used to process mail pieces and print indicia on mail pieces to provide evidence of payment of postage. Each device 12a, 12b, 12c includes a respective hardware security module (HSM) 14a, 14b, 14c that is utilized to generate postage indicia. A HSM is similar to a conventional PSD, but is not configured for only a single customer account and instead can be dynamically configured as will be described further below. System 10 further includes a data center server 20 that is operated by, for example, a postage vendor. Server 20 may be a mainframe or the like that includes at least one processing device (not shown). Server 20 communicates with devices 12a, 12b, 12c via a network 40, such as the Internet. Server 20 may be specially constructed for the required purposes, or it may comprise a general purpose computer selectively activated or reconfigured by a computer program stored therein. Such a computer program may alternatively be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, which are executable by the processing device. One of ordinary skill in the art would be familiar with the general components of a computing system upon which the method of the present invention may be performed. Server 20 also preferably includes a HSM 24.

A database 26 is coupled to the server 20. Database 26 is used to store customer account records that are utilized to configure a HSM when downloaded to the HSM. Each customer record is associated with a specific customer and specific account for that customer and includes information that enables the HSD to generate indicia for the specific customer. Thus, a separate customer record will exist for each possible customer, e.g., Customer A, Customer B, Customer C, ... Customer N, and separate accounts for each customer having multiple accounts, e.g., Account 1, Account 2, Account 3, etc. Each customer record can include, for example, the following information: an identification number, a current upload count, one or more cryptographic keys required to generate indicia or ensure print security, a plurality of register values associated with accounting, a serial number count for generated indicia, a postal code for the customer account record, and any additional parameters required for the generation and accounting of indicia that may be required, including carrier specific requirements. The identification number is associated with a particular customer, and provides a suitable identification of the meter record to allow the appropriate record to be downloaded upon request. The register values can include, for example, an ascending register value (value of all postage ever expended), a descending register value (value of pre-paid postage remaining in meter record), a piece count, and any other register values associated with the record that are desired to be maintained. For those customers that maintain multiple customer accounts, only a single account maintains pre-paid funds in the descending register value, while the other accounts for that customer maintain a zero balance in the descending register. Thus, for example, for Customer A, only Account 1 would maintain some minimum balance of pre-paid funds, while the other accounts for Customer A (Account 2 and Account 3) would not maintain any pre-paid funds (zero balance). Refills of the pre-funded account are processed by the server 20 when the amount of funds falls below some predetermined minimum threshold. When this occurs, the server 20 can replenish funds to the customer account record using standard refill techniques, as are known in the art for postage payment systems, from a customer payment account 42. Customer payment account 42 can be a credit account, pre-paid account, interest bearing account, or the like from which funds are drawn or acquired for use in funding the customer account records. Customer payment account 42 can be maintained by the server 20 (sometimes referred to as a vault), or can be any type of account, such as, for example, a bank account, that the server 20 can access for funds via the network 40. An example of such accounts and refill process is given in US 7,526,454, the contents of which are hereby incorporated by reference.

System 10 can also include other types of postage printing devices, such as, for example, a personal computer 30 coupled to a standard printer 32. Personal computer 32 could be any type of processing device that can support the request and printing of postage, such as a standard personal computer, laptop, tablet or the like. Personal computer 32 requests postage from the server 20 via the network 40, and server 20 uses its HSM 24 to generate indicia for return to the personal computer 30 for printing using printer 32. In this manner, it is not necessary for personal computer 32 to have its own HSM, and instead the HSM 24 of server 20 can be used to provide postage for a plurality of such devices. The PC 30 and printer 32, in combination with the HSM 24 of the data center 20, constitutes a postage printing device.

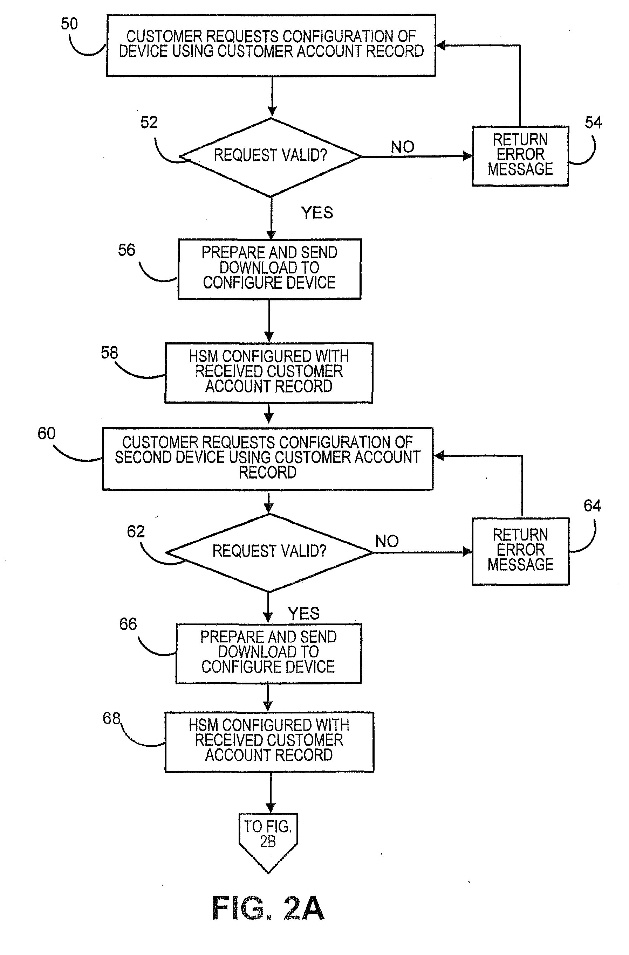

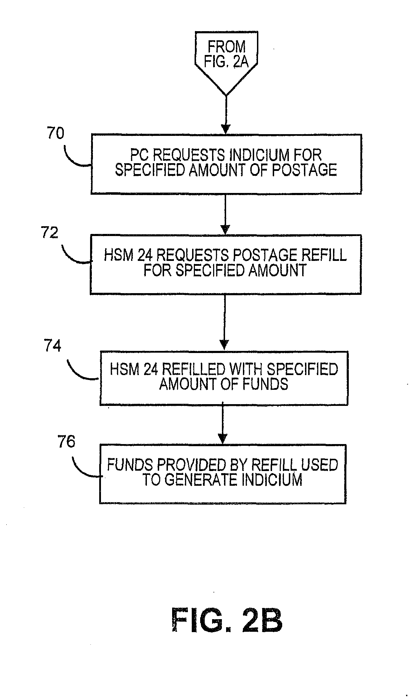

Figs. 2A and 2B illustrate in flow diagram form the processing performed by the system 10 when multiple customer accounts stored in the database 26 will be used to generate indicia for the mail pieces. As previously noted, none of the HSM's are able to generate any type of indicia without having a meter record installed. Thus, when it is desired to use a device 12a, 12b, 12c, 30 to generate indicia, it is necessary to download a suitable meter record from the database 26 to the respective HSM. In step 50, the customer requests that a device be configured to generate postage indicia using a customer account from database 26. Suppose, for example, that Customer A will be using device 12a to generate indicia. A communication is established between the device 12a and the data center server 20 via the network 40. Preferably, the device 12a (or HSM 14a) and data center server 20 perform an authentication procedure utilizing digital signatures or the like based on the cryptographic key(s) stored in the HSM 14a and symmetric key(s) stored in the data base 26 of data center server 20. To prevent misuse of customer account records, security such as password security can be utilized which allows a user to utilize only those customer account records that are associated with a specific password input by the user. Thus, each user can have access only to specified customer account records and will be unable to utilize any other customers' records.

In step 52, a control unit of the data center server 20 determines if the request for the specified customer account record is valid. This can include, for example, verifying the digital signature included with the request. If the request is not valid, then in step 54 an error message is returned which alerts the user that the request message was invalid. Optionally, processing can return to step 50 to allow the user to retry the request or make a new request. If it is determined in step 52 that the request is a valid request, then in step 56 the server 20 prepares and sends a download to the requesting device, i.e., HSM 14a of device 12a. Such a download includes the requested customer account record retrieved from the database 26. Since this is the first request for a customer account record from Customer A, preferably the first account, e.g., Account 1, which maintains pre-funded registers will be returned to the device 12a. Preferably, the download includes a digital signature that can be verified by the HSM 14a for added security. For purposes of this application, it is to be understood that the customer account record that is downloaded can be either the actual account record or an image of the account record with the actual account record being maintained in the database 26.

In step 58, the HSM 14a of device 12a is configured using the customer account record, i.e., Customer A, Account 1, received from the data center server 20. Optionally, before configuration, the HSM 14a can validate the received download. Such validation can include verifying the digital signature provided with the download. Once the HSM 14a has been configured, the device 12a can be used to process mail pieces and generate postal indicia. The generation of indicia and all accounting for each indicia generated are performed locally by HSM 14a using the customer account record stored in the HSM 14a, and all register values and data maintained in the customer account record are updated during the processing of the mail. Upon completion of the processing of the mail using the customer account record stored in HSM 14a, the updated customer account record, which now reflects the mail that has been processed, can be returned to the data center server 20 for storage in database 26.

Now suppose that while the Customer A, Account 1 customer account record is being used by device 12a, Customer A requests that another device be used to also generate indicia. For example, suppose that Customer A desires to also use the PC 30 to generate indicia. In step 60, a communication is established between the PC 30 and the data center server 20 via the network 40 and the customer requests configuration of the PC 30 using a customer account record stored in database 26. In step 62, the data center server 20 determines if the request for the specified customer account record is valid similarly as described above with respect to step 52. If the request is not valid, then in step 64 an error message is returned which alerts the user that the request message was invalid. Optionally, processing can return to step 60 to allow the user to retry the request or make a new request. If it is determined in step 62 that the request is a valid request, then in step 66 the server 20 prepares a download to be sent to configure the requesting device, i.e., PC 30. Recall that as described above, PC 30 utilizes the HSM 24 of server 20 to generate indicia. Such a download includes the requested customer account record retrieved from the database 26. Since the first account for Customer A, e.g., Account 1, which maintains pre-funded registers, is already in use by the device 12a, another customer account record, e.g., Account 2, for Customer A will be retrieved from the database 26.

In step 68, the PC 30/HSM 24 is configured to print postage using the customer account record, i.e., Customer A, Account 2, retrieved from the database 26. Optionally, before configuration, the HSM 24 can validate the received download. Such validation can include verifying the digital signature provided with the download. Once the HSM 24 has been configured, the PC 30 can utilize the HSM 24 to generate indicia, which can be returned to the PC 30 via the network 40 and printed using the printer 32, as follows. Since Account 2 for Customer A does not maintain any pre-funded registers, it is necessary to obtain funds before any indicia can be generated. In step 70, the HSM 24 receives, from the PC 30, a request for an indicium for a specified amount of postage. In step 72, the HSM 24 sends a request to the control unit of the data center server 20 to refill the Customer Account 2 with funds for the specified amount. Preferably, such requests can be made secure using digital signature or the like. In step 74, the server 20 will perform a refill process to provide the HSM 24 that is using the Customer Account 2 with an amount of funds from the customer payment account 42 equal to the specified postage amount. Thus, the HSM 24 will have funds available on-demand to utilize for generation of postage. In step 76, the funds that were refilled to Customer Account 2 are used by HSM 24 to generate an indicium for return to the PC 30 for printing by printer 32. By performing an on-demand postage refill for the exact amount needed to generate the indicium, a single customer can use multiple customer account records in multiple devices to generate indicia, while only having to maintain a single pre-funded account.

While preferred embodiments of the invention have been described and illustrated above, it should be understood that they are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A method for dispensing postage using a plurality of postage printing devices, each of the plurality of postage printing devices being dynamically configured to generate postage using one of a plurality of customer account records stored in a database, the method comprising:
receiving at a data center from a first postage printing device a request for configuration with a first customer account record stored in the database, the first customer account record being associated with a first customer and maintaining pre-paid funds in a register for use in generating postage by a postage printing device configured with the first customer account record;
sending the first customer account record to the first postage printing device to configure the first postage printing device to generate and print postage using the pre-paid funds maintained in the first customer account record;
receiving at the data center from a second postage printing device a request for configuration with a second customer account record stored in the database, the second customer account record being associated with the first customer and not maintaining any pre-paid funds for use in generating postage;
sending the second customer account record to the second postage printing device to configure the second postage printing device to generate and print postage;
receiving at the data center a request from the second postage printing device for a specified amount of postage funds for the second customer account record to generate a postage indicium for printing by the second postage printing device;
providing by the data center to the second postage printing device the specified amount of postage funds for the second customer account record to generate the postage indicium in the specified amount; and
generating, by the second postage printing device using the second customer account record, the postage indicium in the specified amount of postage funds thereby using all of the specified amount of postage funds such that the second customer account record does not maintain any balance of pre-paid funds for use in generating postage.

2. The method of claim 1, wherein the first postage printing device is a mailing machine having an embedded hardware security module to generate postage indicia using the first customer account record.

3. The method of claim 1 or claim 2, wherein the second postage printing device is a personal computer that utilizes a hardware security module at the data center to generate postage indicia using the second customer account record.

4. A postage dispensing system comprising:
a database storing a plurality of customer account records for a customer, a first customer account record for the customer maintaining pre-paid funds in a register for use in generating postage and a second customer account record for the customer not maintaining any pre-paid funds for use in generating postage;
a data center coupled to the database;
a first postage printing device coupled to the data center through a network, the first postage printing device configured to obtain the first customer account record from the data center and using the first customer account record to generate postage using the pre-paid funds in the first customer account record; and
a second postage printing device coupled to the data center through the network, the second postage printing device configured to obtain the second customer account record from the data center, request a specified amount of postage funds for the second customer account record to generate a postage indicium for printing by the second postage printing device, receive the specified amount of postage funds for the second customer account record , and generate the postage indicium in the specified amount of postage funds thereby using all of the specified amount of postage funds such that the second customer account record does not maintain any balance of pre-paid funds for use in generating postage.

5. The system of claim 4, wherein the first postage printing device is a mailing machine having an embedded hardware security module to generate postage indicia using the first customer account record.

6. The system of claim 4 or claim 5, wherein the second postage printing device is a personal computer arranged to utilize a hardware security module at the data center to generate postage indicia using the second customer account record.
